# EUROPÄISCHE PATENTANMELDUNG

(11) **EP 4 834 508 A1**
(43) Veröffentlichungstag der Anmeldung: **04.11.2026**
(21) Anmeldenummer: 25172936.4
(22) Anmeldetag: 28.04.2025
(51) Int. Cl.: B23B 31/20

(54) **SPANNKOPF**

(71) Anmelder: Hainbuch GmbH Spannende Technik, 71672 Marbach (DE)
(72) Erfinder: Jundt, Yannik, 71640 Ludwigsburg (DE); Hillinger, Alfred, 71711 Murr (DE)
(74) Vertreter: Witte, Weller und Partner Patentanwälte mbB Stuttgart

(57) **Zusammenfassung**

Bekannt ist ein Spannkopf (2) zur spannenden Aufnahme eines Werkstücks. Der Spannkopf (2) umfasst mehrere ringförmig um eine Mittelachse (M) angeordnete Spannkopfsegmente (10), die zum Zwecke des Spannens radial gegeneinander beweglich sind sowie eine Mehrzahl von Einsatzbacken (20), die wechselbar an den Spannkopfsegmenten (10) befestigbar sind.

Es wird vorgeschlagen, dass mindestens eine Einsatzbacke (20) und mindestens ein Spannkopfsegment (10) zusammenwirkende Haltegeometrien aufweisen, die bezogen auf eine Radialrichtung einen formschlüssigen Eingriff zwischen Einsatzbacke (20) und Spannkopfsegment (10) ermöglichen. Die Einsatzbacke (20) und das Spannkopfsegment (10) sind dabei derart für eine Anbringung der Einsatzbacke (20) am Spannkopfsegment (10) ausgebildet, dass die Einsatzbacke (20) axial in einer zur Mittelachse (M) im Wesentlichen parallelen Einführrichtung (A) in den Spannkopf (2) einsetzbar ist, wobei durch das axiale Einsetzen in Einführrichtung (A) die Haltegeometrien in Eingriff miteinander gelangen.

## Beschreibung

Die vorliegende Erfindung betrifft einen Spannkopf zur spannenden Aufnahme eines Werkstücks, insbesondere zum Zwecke der spanenden Bearbeitung. Derartige Spannköpfe finden Anwendung als Teil von rotierenden oder nicht rotierenden Spannvorrichtungen, etwa in Drehmaschinen und Bearbeitungszentren, bei denen eine präzise und wiederholbare Positionierung des Werkstücks erforderlich ist.

Ein Spannkopf gattungsgemäßer Art besteht hierbei aus mehreren radial zueinander beweglichen Spannsegmenten, die gemeinsam eine Werkstückaufnahme definieren.

Die Erfindung betrifft Spannköpfe, bei denen die Spannsegmente zweiteilig sind. Die Spannsegmente umfassen ein Spannkopfsegment, wobei die Gesamtheit der Spannkopfsegmente einen Ring bildet. An der Innenseite der Spannkopfsegmente sind werkstückberührende Einsatzbacken vorgesehen, die für unterschiedliche Werkstückkonturen jeweils flexibel gewählt werden können.

Verschiedene Techniken sind bekannt, um die Einsatzbacken an den Spannkopfsegmenten zu befestigen. Die bekannten Techniken gehen jedoch in der Regel mit einer nicht ausreichend genauen Positionierung und daher dem Bedarf komplizierter Ausrichtung der Einsatzbacken und/oder mit großen Spalten zwischen den Einsatzbacken und Verschmutzungsgefahr einher.

Die Einführung und der Austausch der Einsatzbacken erfolgt bei vielen bekannten Lösungen radial zur Spannkopf-Mittelachse.

### AUFGABE UND LÖSUNG

Der Erfindung liegt die Aufgabe zugrunde, einen Spannkopf zur Verfügung zu stellen, der einen vergleichsweise einfachen Wechsel von Einsatzbacken bei gleichzeitig hoher Positioniergenauigkeit gestattet.

Zur Lösung dieser Aufgabe wird ein Spannkopf vorgeschlagen, der mehrere ringförmig um eine Mittelachse angeordnete Spannkopfsegmente aufweist, welche zum Zwecke des Spannens radial gegeneinander beweglich sind. Die Spannkopfsegmente definieren zu diesem Zweck vorzugsweise mit ihrer Außenseite eine Kegelform oder Pyramidenform, die durch Axialverlagerung gegenüber einer Kegelaufnahme zu einer Radialbewegung der Spannkopfsegmente führt.

Der Spannkopf umfasst eine Mehrzahl von Einsatzbacken, die wechselbar an den Spannkopfsegmenten befestigbar sind. Die Einsatzbacken sind dafür vorgesehen, unmittelbar in Werkstückkontakt zu gelangen und in Abhängigkeit des Werkstücks und der konkreten Bearbeitung ausgewählt zu werden. Es kann vorgesehen sein, dass zumindest eine Einsatzbacke auf ihrer werkstückzugewandten Spannseite eine strukturierte Spannfläche aufweist. Solche Strukturen können beispielsweise als Riffelungen, Zähne oder andere profilierte Konturen ausgebildet sein.

Mindestens eine Einsatzbacke und mindestens ein Spannkopfsegment weisen zusammenwirkende Haltegeometrien auf, die in Radialrichtung einen formschlüssigen Eingriff zwischen Einsatzbacke und Spannkopfsegment ermöglichen. Die Einsatzbacke und das zugeordnete Spannkopfsegment sind dabei so ausgebildet, dass die Einsatzbacke axial in einer zur Mittelachse im Wesentlichen parallelen Einführrichtung in den Spannkopf eingesetzt werden kann, wobei die Haltegeometrien im Zuge dieses axialen Einsetzens in Eingriff miteinander gelangen.

Idealerweise ist die Einführrichtung exakt parallel zur Mittelachse. Die erfindungsgemäßen Vorteile werden jedoch auch bereits erreicht, wenn die Einführrichtung der Einsatzbacke mit der Mittelachse des Spannkopfs einen Winkel < 15° einschließt, vorzugsweise < 3°.

Üblicherweise sind mehrere der Spannkopfsegmente und Einsatzbacken in dieser Art gestaltet, insbesondere alle Spannkopfsegmente und Einsatzbacken des Spannkopfes. Wenn im Weiteren Details zu einem Spannkopfsegment bzw. einer Einsatzbacke beschrieben sind, so bezieht sich das auch auf derartige Gestaltungen mit einer Mehrzahl gleichartiger Spannkopfsegmente und Einsatzbacken.

Durch die erfindungsgemäße Ausgestaltung wird es möglich, die Einsatzbacken ohne radiales Einsetzen oder manuelles Ausrichten exakt und formschlüssig in den Spannkopf einzubringen. Die axiale Einführrichtung sorgt dafür, dass kein umfänglicher Abstand zwischen den Einsatzbacken verbleiben muss, sodass insbesondere an einer oder mehreren Einsatzbacken anvulkanisierte elastische Zwischensegmente vorgesehen sein können, die Spalte vermeiden.

Die axiale Verlagerung der Einsatzbacke beim Einsetzen in den durch die Spannkopfsegmente gebildeten Ring führt gegen Ende der Bewegung zum formschlüssigen Eingriff bezogen auf die Radialrichtung. Sobald dieser Eingriff gegeben ist, kann die Einsatzbacke nicht mehr in radialer Richtung entweichen, ohne dass sie hierfür auch axial gegenüber dem Spannkopfsegment verlagert wird. Wird dann die axiale Beweglichkeit limitiert, ist die Einsatzbacke am Spannkopfsegment festgelegt.

Durch besondere Gestaltung der Haltegeometrien wird darüber hinaus ein reproduzierbar genauer Sitz der Einsatzbacke erzielt, ohne dass aufwändige Positionierhilfen oder nachträgliche Einstellarbeiten erforderlich sind. Zugleich wird die Montage erleichtert, da die Einsatzbacke einfach entlang einer linearen Bewegungsbahn eingeführt werden kann und hierdurch der Formschluss hergestellt wird.

Die Erfindung ermöglicht somit einen schnellen, sicheren und präzisen Wechsel der werkstückberührenden Backen und verbessert die Wiederholgenauigkeit bei unterschiedlichen Spannzyklen.

Es kann vorteilhaft sein, wenn an einem oder mehreren Spannkopfsegmenten eine in Einführrichtung verlaufende Führungsnut vorgesehen ist, in welcher die jeweilige Einsatzbacke geführt eingesetzt werden kann. Eine derartige Führungsnut unterstützt die präzise Bewegung der Einsatzbacke entlang einer definierten Bahn und sichert zugleich deren lagegenaue Einführung. Besonders günstig ist es hierbei, wenn die Haltegeometrie auf Seiten des Spannkopfsegments fluchtend zur Führungsnut oder innerhalb derselben angeordnet ist. Die Führungsnut kann formschlüssig mit der Einsatzbacke zusammenwirken, sodass ein Herausgleiten der Einsatzbacke schon vor Erreichen der Endlage und dem dortigen Zusammenwirken der Haltegeometrien unterbunden ist. Erforderlich ist dies jedoch nicht. Auch eine Gestaltung mit einer nicht formschlüssig wirkenden Nut ist möglich und technisch sinnvoll, um beim Einsetzen der Einsatzbacken ein gewisses Maß an Seitenhalt zu erzielen.

In einer bevorzugten Ausführungsform kann einer oder mehreren Einsatzbacken ein Niederhalter zugeordnet sein, welcher im montierten Zustand eine Relativbewegung der Einsatzbacke gegenüber dem zugeordneten Spannkopfsegment verhindert oder begrenzt. Vorzugsweise ist ein Niederhalter je Einsatzbacke vorgesehen. Der Niederhalter limitiert die Beweglichkeit der über die Haltegeometrien gehaltenen Einsatzbacke.

Es kann dabei vorgesehen sein, dass der Niederhalter durch eine Schraubverbindung mit dem Spannkopfsegment befestigt ist. Eine derartige Anbindung erlaubt eine einfache und wieder lösbare Montage des Niederhalters bei zugleich zuverlässiger Klemmwirkung.

Der Niederhalter kann die Einsatzbacke vollständig festlegen, indem er an der Einsatzbacke zur Anlage gelangt und die Einsatzbacke wiederum im Bereich der Haltegeometrien zur Anlage gelangt. Es verbleibt dann also keinerlei Spiel.

Bezüglich des Niederhalters, des Spannkopfsegments und der Einsatzbacke kann jedoch eine derart abgestimmte Formgebung vorgesehen sein, dass die Einsatzbacke nach Befestigung des Niederhalters axial zwar gesichert, aber leicht spielbehaftet aufgenommen ist. Ein derartiges Spiel, insbesondere im Bereich zwischen 0,01 mm und 0,1 mm, kann thermischen Längenausdehnungen Rechnung tragen oder Fertigungstoleranzen ausgleichen. Vorteil dessen ist, dass der Niederhalter hierfür maximal am Spannkopfsegment festgelegt werden kann, ohne dass dies zu einer elastischen Spannung im Niederhalter im Kontaktbereich mit der Einsatzbacke führt.

Zur Erzielung eines besonders formschlüssigen Sitzes ist vorzugsweise vorgesehen, dass die Haltegeometrie an der Einsatzbacke oder am Spannkopfsegment mindestens eine schräggestellte Führungsfläche umfasst, durch welche die Einsatzbacke gegen Ende der Einführrichtung radial gegen das Spannkopfsegment gepresst wird. Die Haltegeometrien bewirken also nicht nur eine Sicherung, sondern führen zu einer definierten Lage der Einsatzbacke im montierten Zustand.

Durch die mindestens eine schräge Führungsfläche wird die Einsatzbacke automatisch in ihre Endposition radial nach außen gedrückt. Vorteilhafterweise können beide Haltegeometrien an der Einsatzbacke und dem Spannkopfsegment je eine zueinander passende schräge Führungsfläche aufweisen, welche im Endzustand flächig aneinander anliegen und somit eine präzise und wiederholbare Positionierung ermöglichen.

Zur Unterstützung dieses Effekts kann ferner vorgesehen sein, dass an der Einsatzbacke eine weitere Anpressgeometrie ausgebildet ist, die mit einer komplementären Anpressgeometrie am Niederhalter zusammenwirkt. Hierbei kann es sich ebenfalls um schräge Führungsflächen handeln. Diese Gestaltung mit Anpressgeometrien sowohl zwischen Einsatzbacke und Spannkopfsegment als auch zwischen Einsatzbacke und Niederhalter erlaubt es, die Einsatzbacke an zwei axial beabstandeten Punkten radial nach außen zu pressen und dadurch auch eine exakte Parallelität der Spannfläche der Einsatzbacke mit einer Mittelachse zu erzielen.

Um das Eindringen von Verunreinigungen in Spalte zwischen benachbarten Einsatzbacken zu verhindern, kann ein elastisches Zwischensegment vorgesehen sein bzw. vorzugsweise natürlich Zwischensegmente zwischen allen Einsatzbacken. Diese Zwischensegmente sind im montierten Zustand zwischen zwei Einsatzbacken angeordnet und verschließen den Spalt zumindest weitgehend. Durch die axiale Einführrichtung wird die Verwendung solcher Zwischensegmente und das Schließen der Spalte zwischen den Einsatzbacken ermöglicht.

Mittels der Zwischensegmente können die Einsatzbacken auch dauerhaft miteinander verbunden sein. Denkbar ist eine Gestaltung, bei der alle Einsatzbacken über beidseitig anvulkanisierte Zwischensegmente zu einem Ring verbunden sind. Möglich ist auch eine Gestaltung, bei der mindestens zwei Einsatzbackensegmente mit jeweils mehreren Einsatzbacken vorgesehen sind, die nacheinander eingesetzt werden können.

Besonders bevorzugt ist es, wenn die Einsatzbacken jeweils nicht bereits vor Montage miteinander zusammenhängen, sondern separat handhabbar sind und bestimmungsgemäß nacheinander eingesetzt werden, was durch die axiale Einführrichtung ermöglicht wird. Besonders günstig ist es in diesem Falle, wenn das elastische Zwischensegment einstückig mit einer der Einsatzbacken verbunden ist und sich im eingebauten Zustand an der benachbarten Einsatzbacke nur abstützt, mit dieser aber nicht fest verbunden ist. Hierdurch lässt sich eine einfache Montage mit zuverlässiger Abdichtung kombinieren.

Die Zwischensegmente erfüllen neben der Abdichtung des Spaltes noch eine weitere Funktion, indem sie eine Kraft bereitstellen, die in Richtung einer Aufweitung des aus den Einsatzbacken bestehenden Rings wirkt. Dies führt dazu, dass die Zwischensegmente die Einsatzbacken, gegebenenfalls zusammen mit den Haltegeometrien, in die Sollposition drücken.

Als besonders vorteilhaft hat sich die Kombination aus Haltegeometrien mit mindestens einerschrägen Führungsfläche sowie in Aufweitungsrichtung wirkenden Zwischensegmenten erwiesen. Insbesondere sind Anpressgeometrien am Niederhalter und den Einsatzbacken bei einer solchen Gestaltung entbehrlich.

In einer weiteren Ausgestaltung kann vorgesehen sein, dass die Einsatzbacke auf der ihrer Spannfläche gegenüberliegenden Rückseite einen hervorstehenden Kopplungsfortsatz aufweist. An diesem Kopplungsfortsatz kann die Haltegeometrie vorgesehen sein, beispielsweise in Form einer schrägen Führungsfläche oder eines Rastprofils. Alternativ oder zusätzlich kann der Kopplungsfortsatz so ausgebildet sein, dass er beim Anbringen des Niederhalters kontaktiert und eine axiale Fixierung der Einsatzbacke unterstützt. Auch zwei einander gegenüberliegende schräge Führungsflächen auf einander gegenüberliegenden Seiten des Kopplungsfortsatzes sind möglich.

Je nach Anwendung kann die Anzahl der Einsatzbacken innerhalb eines Spannkopfs variieren. Besonders bewährt haben sich Ausführungen mit drei bis zwölf Einsatzbacken, wobei der Bereich zwischen drei und sechs Einsatzbacken eine gute Kombination aus Flexibilität, Formschluss und Herstellbarkeit bietet.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt einen erfindungsgemäßen Spannkopf in Gesamtdarstellung.
Fig. 2 zeigt den Spannkopf der Figur 1 in geschnittener Darstellung.
Fig. 3 zeigt eine Rückseite einer Einsatzbacke des Spannkopfs.
Fig. 4 zeigt am Beispiel einer Einsatzbacke das Einsetzen in das zugehörige Spannkopfsegment sowie die Fixierung mittels eines Niederhalters.
Fig. 5 zeigt in geschnittener Darstellung die Einsatzbacke in fixiertem Zustand.
Fig. 6 verdeutlicht die Montage des Spannkopfs.
Fig. 7 zeigt eine alternative Gestaltung einer Fixierung mit modifizierter Einsatzbacke und modifiziertem Niederhalter in geschnittener Darstellung.

### DETAILLIERTE BESCHREIBUNG DER AUSFÜHRUNGSBEISPIELE

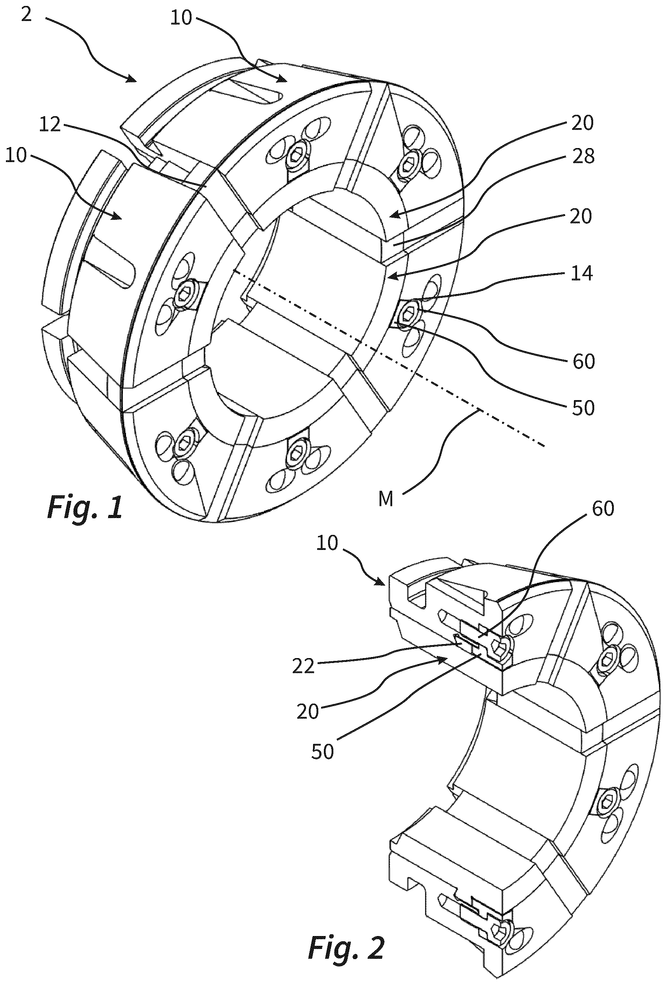

Fig. 1 zeigt einen erfindungsgemäßen Spannkopf 2 in perspektivischer Gesamtdarstellung im montierten Zustand. Sichtbar sind mehrere Spannkopfsegmente 10, die ringförmig um eine Mittelachse M angeordnet sind und eine radiale Spannbewegung ermöglichen. An ihrer Außenseite sind die Spannkopfsegmente 10 mit schrägen Außenflächen versehen, um durch Einziehen in einen Spannkonus radial aufeinander zu bewegt zu werden.

Zwischen den Spannkopfsegmenten 10 befinden sich elastische Zwischensegmente 12, welche der Abdichtung in Umfangsrichtung dienen.

Jedes Spannkopfsegment 10 trägt eine zugeordnete Einsatzbacke 20, die entlang einer zur Mittelachse M im Wesentlichen parallelen Einführrichtung A in das Spannkopfsegment eingesetzt wurde, wie im Weiteren erläutert. Zwischen benachbarten Einsatzbacken 20 befinden sich ebenfalls elastische Zwischensegmente 28, die umlaufend eine spaltfreie oder spaltvermeidende Gestaltung unterstützen.

Die Einsatzbacken 20 sind durch Niederhalter 50 gesichert, die in ein oberes Ende einer Nut am jeweiligen Spannkopfsegment 10 eingesetzt und mittels Schrauben 60 an den Spannkopfsegmenten befestigt sind.

Fig. 2 zeigt den Spannkopf der Figur 1 in radialer Schnittdarstellung. Zu erkennen ist, dass die Einsatzbacken 20 durch eine besondere Geometrie der Niederhalter 50, des Spannkopfsegments 10 und der Einsatzbacken 20 im Bereich eines Kopplungsfortsatzes 22 in Position gehalten werden. Dies ist im Weiteren noch detaillierter gezeigt und erläutert.

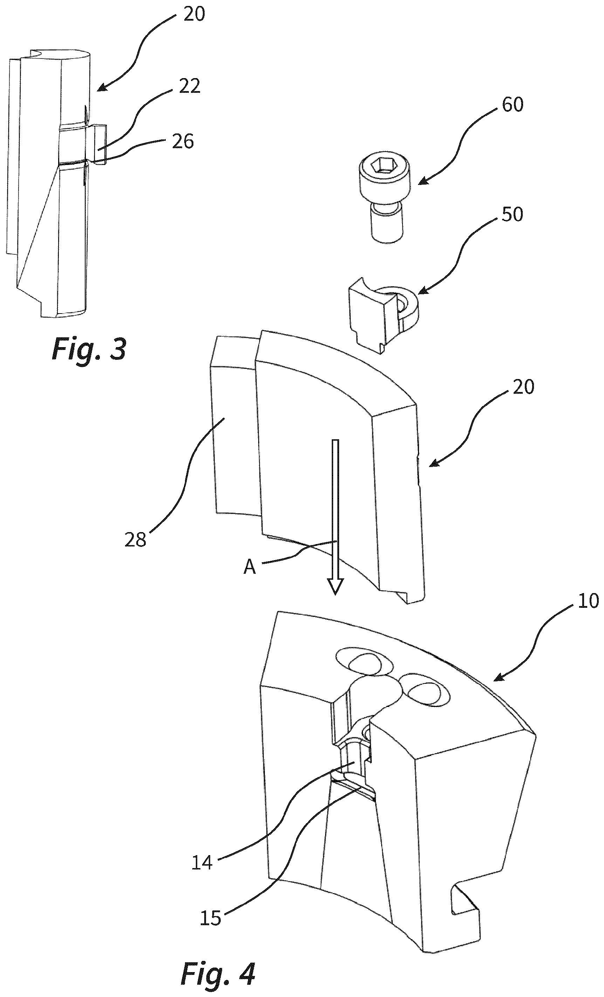

Fig. 3 zeigt eine Rückansicht einer einzelnen Einsatzbacke 20. Zu erkennen ist der rückseitige Kopplungsfortsatz 22 mit einer schräggestellten Führungsfläche 26, die zur Ausbildung eines formschlüssigen Eingriffs in das Spannkopfsegment dient. Die Geometrie des Kopplungsfortsatzes 22 ist so gestaltet, dass die Einsatzbacke 20 in der Führungsnut 14 geführt werden kann.

Fig. 4 zeigt die Einbau- und Montagesituation einer Einsatzbacke 20 mit zugehörigem Spannkopfsegment 10. Die Einsatzbacke wird entlang der EinführrichtungA in die Führungsnut 14 eingeschoben. Gegen Ende dieser Bewegung gelangt die schräggestellte Führungsfläche 26 in eine Einbuchtung 15 und führt zu einem radialen Formschluss sowie zu einem Verspannen, wie im Weiteren noch erläutert wird. Nach dem Einsetzen der Einsatzbacke 20 wird diese durch einen Niederhalter 50 gesichert. Der Niederhalter 50 wird hierzu mit einer Schraube 60 fixiert.

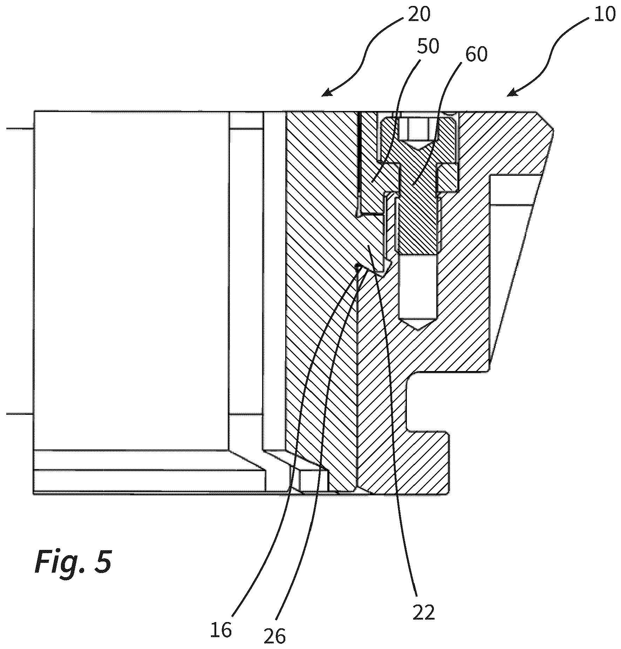

Fig. 5 zeigt den gefügten Zustand in einer Schnittdarstellung. Hier ist zu ersehen, dass der Kopplungsfortsatz 22 mit seiner schräggestellten Führungsfläche 26 in die Einbuchtung 15 eingerückt ist und dort an einer korrespondierenden schräggestellten Führungsfläche 16 des Spannkopfsegments 10 anliegt. Der Niederhalter 50 begrenzt mit einer unteren Abschlussfläche die Verlagerbarkeit des Kopplungsfortsatzes 22 und damit der Einsatzbacke 20. Allerdings ist bevorzugt, dass hier minimales Spiel verbleibt, sodass die Schraube 60 festgezogen werden kann, ohne dass dies zu einer Biegebeanspruchung des Niederhalters 50 führt.

Aufgrund der schräggestellten Führungsflächen 16, 26 wird die Einsatzbacke 20 radial nach außen gedrückt, also in der Fig. 5 nach rechts. Sie befindet sich somit nach dem Einsetzen und Fixieren in einer definierten Sollposition.

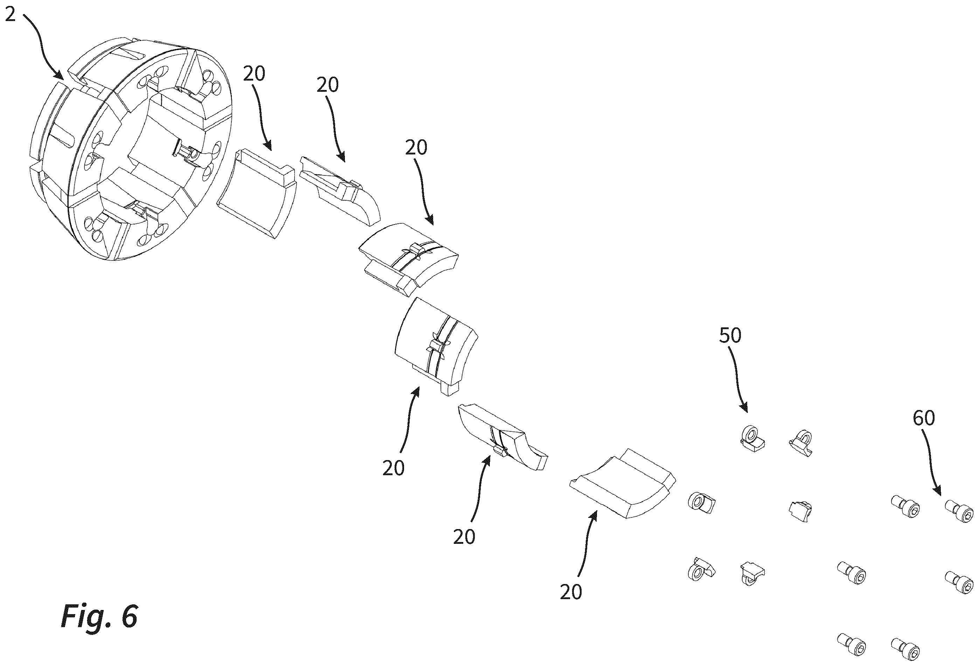

Fig. 6 zeigt nochmals den Spannkopf 2 mit allen Komponenten. Der Figur ist zu entnehmen, dass die Einsatzbacken 20 alle axial zugeführt werden und dies bei diesem Ausführungsbeispiel sequentiell nacheinander erfolgt. Aufgrund der axialen Zuführung sind auch die jeweiligen Zwischensegmente 28 hierbei nicht im Weg. Allerdings sind die Zwischensegmente 28 so bemessen, dass sie an jeweils benachbarten Einsatzbacken 20 zur Anlage gelangen und dabei elastisch bezogen auf die Umfangsrichtung etwas gestaucht werden, sodass der durch die Einsatzbacken 20 gebildete Ring eine Tendenz zur Aufweitung aufweist. Dies gewährleistet, dass die Einsatzbacken 20 ihre Sollposition anliegend am jeweiligen Spannkopfsegment 10 einnehmen.

Zur Sicherung der Einsatzbacken 20 sind die bereits beschriebenen Niederhalter 50 und die Schrauben 60 vorgesehen.

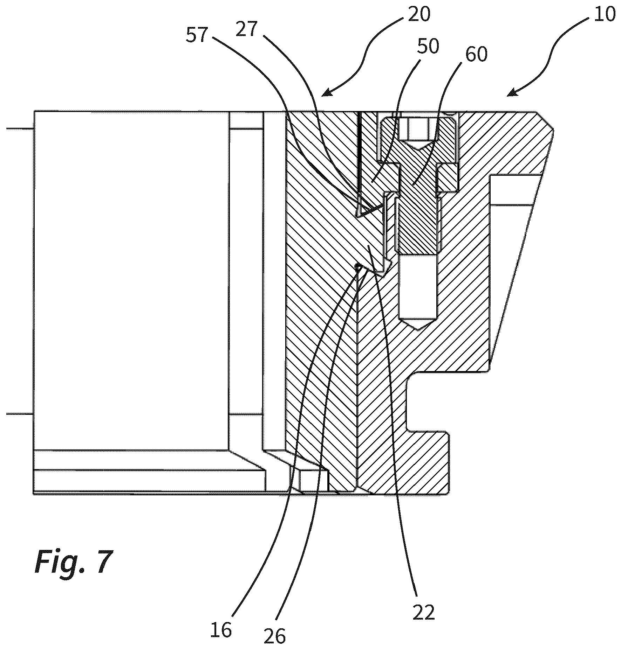

Fig. 7 zeigt in gleicher Darstellungsart wie Fig. 5 eine alternative Gestaltung. Hier sind die Niederhalter 50 mit einer Anpressschräge 57 versehen, die auf eine komplementäre Anpressschräge 27 der Einsatzbacke 20 wirkt. Dies führt dazu, dass die Einsatzbacke an zwei axial beabstandeten Stellen, nämlich im Bereich der schräggestellten Flächen 26, 27, radial nach außen kraftbeaufschlagt wird und dadurch sich eine sehr definierte Anlage am Spannkopfsegment 10 einstellt. Eine solche Bauweise könnte daher besonders gut auch ohne die Zwischensegmente 28 auskommen, da es diese zur Erzielung einer definierten Anlage hier nicht braucht.

## Patentansprüche

1. Spannkopf (2) zur spannenden Aufnahme eines Werkstücks mit den folgenden Merkmalen:
a. der Spannkopf (2) umfasst mehrere ringförmig um eine Mittelachse (M) angeordnete Spannkopfsegmente (10), die zum Zwecke des Spannens radial gegeneinander beweglich sind, und
b. der Spannkopf (2) umfasst eine Mehrzahl von Einsatzbacken (20), die wechselbar an den Spannkopfsegmenten (10) befestigbar sind,
**gekennzeichnet durch** die folgenden Merkmale:
c. mindestens eine Einsatzbacke (20) und mindestens ein Spannkopfsegment (10) weisen zusammenwirkende Haltegeometrien auf, die bezogen auf eine Radialrichtung einen formschlüssigen Eingriff zwischen Einsatzbacke (20) und Spannkopfsegment (10) ermöglichen, und
d. die Einsatzbacke (20) und das Spannkopfsegment (10) sind derart für eine Anbringung der Einsatzbacke (20) am Spannkopfsegment (10) ausgebildet, dass die Einsatzbacke (20) axial in einer zur Mittelachse (M) im Wesentlichen parallelen Einführrichtung (A) in den Spannkopf (2) einsetzbar ist, wobei durch das axiale Einsetzen in Einführrichtung (A) die Haltegeometrien in Eingriff miteinander gelangen.

2. Spannkopf (2) nach Anspruch 1 mit den folgenden weiteren Merkmalen:
a. an mindestens einem Spannkopfsegment (10) ist eine in Einführrichtung (A) verlaufende Führungsnut (14) vorgesehen, in welcher die Einsatzbacke (20) geführt einsetzbar ist, und
b. die Haltegeometrie auf Seiten des Spannkopfsegments (10) ist fluchtend zur Führungsnut (14) oder innerhalb der Führungsnut (14) angeordnet.

3. Spannkopf (2) nach Anspruch 1 oder 2 mit dem folgenden weiteren Merkmal:
a. mindestens einer Einsatzbacke (20) ist ein Niederhalter (50) zugeordnet, welcher im montierten Zustand die Beweglichkeit der Einsatzbacke (20) relativ zum zugeordneten Spannkopfsegment (10) begrenzt und die Haltegeometrien damit im Eingriff hält.

4. Spannkopf (2) nach Anspruch 3 mit dem folgenden weiteren Merkmal:
a. der Niederhalter (50) ist im montierten Zustand mittels einer Schraube (60) am Spannkopfsegment (10) befestigt.

5. Spannkopf (2) nach Anspruch 3 oder 4 mit dem folgenden weiteren Merkmal:
a. der Niederhalter (50), das Spannkopfsegment (10) und die Einsatzbacke (20) sind derart aufeinander abgestimmt, dass nach Befestigung des Niederhalters (50) die Einsatzbacke (20) axial spielbehaftet gesichert ist, wobei das Spiel vorzugsweise zwischen 0,01 mm und 0,1 mm beträgt.

6. Spannkopf (2) nach einem der vorstehenden Ansprüche mit dem folgenden weiteren Merkmal:
a. die Haltegeometrie an der Einsatzbacke (20) oder die Haltegeometrie am Spannkopfsegment (10) umfasst mindestens eine gegenüber der Einführrichtung (A) schräggestellte Führungsfläche (26), durch welche die Einsatzbacke (20) gegen Ende der Einfügung gegen das Spannkopfsegment (10) gepresst wird,
vorzugsweise mit dem folgenden zusätzlichen Merkmal:
b. die Haltegeometrie an der Einsatzbacke (20) und die Haltegeometrie am Spannkopfsegment (10) umfassen jeweils eine schräggestellte Führungsfläche (26), wobei die Führungsflächen (26) im montierten Zustand der Einsatzbacke (20) flächig aneinander anliegen.

7. Spannkopf (2) nach einem der Ansprüche 3 bis 6 mit dem folgenden weiteren Merkmal:
a. die Einsatzbacke (20) weist eine Anpressgeometrie (27) auf, welche mit einer komplementären Anpressgeometrie (57) des Niederhalters (50) zusammenwirkt, wobei hierdurch beim Anbringen des Niederhalters (50) eine Pressung der Einsatzbacke (20) gegen das Spannkopfsegment (10) erzeugt wird.

8. Spannkopf (2) nach einem der vorstehenden Ansprüche mit dem folgenden weiteren Merkmal:
a. zwischen zwei benachbarten Einsatzbacken (20) ist ein elastisches Zwischensegment (28) vorgesehen, welches in montiertem Zustand einen Spalt gegen das Eindringen von Verunreinigungen schützt.

9. Spannkopf (2) nach Anspruch 8 mit dem folgenden weiteren Merkmal:
a. das elastische Zwischensegment (28) ist an einer Seitenfläche einer Einsatzbacke (20) befestigt und legt sich im montierten Zustand an der benachbarten Einsatzbacke (20) an.

10. Spannkopf (2) nach einem der vorstehenden Ansprüche mit dem folgenden weiteren Merkmal:
a. die Einsatzbacke (20) weist auf der einer Spannfläche abgewandten Rückseite einen hervorstehenden Kopplungsfortsatz (22) auf, an welchem die Führungsfläche (26) vorgesehen ist und/oder der mit dem Niederhalter (50) bei der Montage in Kontakt gelangt.

11. Spannkopf (2) nach einem der vorstehenden Ansprüche mit mindestens einem der folgenden zusätzlichen Merkmale:
a. die Einsatzbacken (20) bilden im montierten Zustand einen umlaufend geschlossenen Ring, und/oder
b. die Einsatzbacken (20) sind als separat handhabbare Einzeleinsatzbacken oder separat handhabbare Einsatzbackensegmente ausgebildet, wobei eine Mehrzahl von Einzeleinsatzbacken (20) oder Einsatzbackensegmente gemeinsam in den Spannkopf (2) einsetzbar sind, und/oder
c. die Einführrichtung (A) ist exakt parallel zur Mittelachse (M) des Spannkopfs (2) ausgerichtet oder die Einführrichtung (A) schließt mit der Mittelachse (M) einen Winkel kleiner 3° ein, und/oder
d. mindestens eine Einsatzbacke (20) weist auf ihrer dem Werkstück zugewandten Seite eine strukturierte Spannfläche auf, und/oder
e. es sind zwischen drei und zwölf Einsatzbacken (20) vorgesehen, vorzugsweise zwischen drei und sechs Einsatzbacken (20).

12. Spannkopf (2) zur spannenden Aufnahme eines Werkstücks mit den folgenden Merkmalen, insbesondere Spannkopf (2) nach einem der vorstehenden Ansprüche:
a. der Spannkopf (2) umfasst mehrere ringförmig um eine Mittelachse (M) angeordnete Spannkopfsegmente (10), die zum Zwecke des Spannens radial gegeneinander beweglich sind, und
b. der Spannkopf (2) umfasst eine Mehrzahl von Einsatzbacken (20), die wechselbar an den Spannkopfsegmenten (10) befestigbar sind, und
c. die Einsatzbacken (20) sind als separat handhabbare Einzeleinsatzbacken oder separat handhabbare Einsatzbackensegmente ausgebildet, wobei eine Mehrzahl von Einzeleinsatzbacken (20) oder Einsatzbackensegmente gemeinsam in den Spannkopf (2) einsetzbar sind,
**gekennzeichnet durch** die folgenden Merkmale:
d. zwischen benachbarten Einsatzbacken (20) ist jeweils ein elastisches Zwischensegment (28) vorgesehen, der im montierten Zustand einen Spalt zwischen den Einsatzbacken (20) gegen das Eindringen von Verschmutzungen schützt, wobei mindestens ein elastisches Zwischensegment (28) an einer Einzeleinsatzbacke (20) oder einem Einsatzbackensegment fest angebracht ist und im Zuge der Montage mit einer benachbarten Einzeleinsatzbacke (20) oder einem benachbarten Einsatzbackensegment oder einem daran vorgesehenen Zwischensegment in Kontakt gelangt.

13. Spannkopf (2) nach Anspruch 12 mit mindestens einem der folgenden zusätzlichen Merkmale:
a. das elastische Zwischensegment (28) ist seitlich an der jeweiligen Einzeleinsatzbacke (20) oder dem jeweiligen Einsatzbackensegment angeordnet und ragt in montiertem Zustand in einen Spaltbereich zwischen zwei benachbarten Einsatzbacken (20) hinein.
